# EUROPEAN PATENT APPLICATION

(11) **EP 4 607 239 A1**
(43) Date of publication of application: **27.08.2025**
(21) Application number: 23879491.1
(22) Date of filing: 31.08.2023
(51) Int. Cl.: G01S 13/46, G01S 13/74

(54) **DISTANCE MEASUREMENT METHOD AND DISTANCE MEASUREMENT SYSTEM**

(30) Priority: 21.10.2022 JP 2022169070
(71) Applicant: Alps Alpine Co., Ltd., Tokyo 145-8501 (JP)
(72) Inventor: WAKANA, Keigo, Tokyo 145-8501 (JP); TERADO, Yusuke, Tokyo 145-8501 (JP); TAKAI, Daisuke, Tokyo 145-8501 (JP); SAITO, Toshihiko, Tokyo 145-8501 (JP)
(74) Representative: Maiwald GmbH
(86) International application number: PCT/JP2023/031937
(87) International publication number: WO 2024/084840

(57) **Abstract**

A ranging method and a ranging system that can shorten a processing time required for ranging when ranging is performed with a plurality of communication stations, are provided.

The ranging method is a ranging method performed in a ranging system, the ranging system including a first communication station; and a plurality of second communication stations configured to measure a distance to the first communication station by bidirectionally transmitting and receiving signals of a plurality of frequencies to and from the first communication station, wherein when the plurality of second communication stations receive a request signal from the first communication station, the plurality of second communication stations transmit ranging data representing the measured distance to the first communication station.

## Description

### Technical Field

The present disclosure relates to a ranging method and ranging system.

### Background Art

Conventionally, there has been provided a control device including a control unit that receives information about the situation of radio waves and the distribution of a plurality of communication stations, from a mobile object for measurement that flies over a plurality of communication stations and receives radio waves output from a mobile base station, and that determines the position of the mobile base station based on the situation of the radio waves and the distribution of the plurality of communication stations; and a transmission unit that notifies the mobile base station of the information about the determined position (see, for example, Patent Document 1).

### Citation List

### Patent Document

Patent Document 1: Japanese Unexamined Patent Application Publication No. 2019-33409

### Summary of Invention

### Technical Problem

Incidentally, patent document 1 does not disclose any contrivance to shorten the processing time required for position determination (ranging) when a moving position is determined based on the radio wave situation and the distribution of a plurality of communication stations.

Therefore, it is an object to provide a ranging method and a ranging system capable of shortening the processing time required for ranging when ranging is performed with a plurality of communication stations.

### Solution to Problem

A ranging method according to an embodiment in the present disclosure is a ranging method performed in a ranging system, the ranging system including:
a first communication station; and
a plurality of second communication stations configured to measure a distance to the first communication station by bidirectionally transmitting and receiving signals of a plurality of frequencies to and from the first communication station, wherein
when the plurality of second communication stations receive a request signal from the first communication station, the plurality of second communication stations transmit ranging data representing the measured distance to the first communication station.

### Advantageous Effects of Invention

A ranging method and a ranging system that can reduce the processing time required for ranging when ranging is performed with a plurality of communication stations, can be provided.

### Brief Description of Drawings

[FIG. 1] FIG. 1 is a diagram illustrating an example of the configuration of a ranging system according to an embodiment.
[FIG. 2] FIG. 2 is a diagram illustrating an example of the operation of a ranging system according to an embodiment.
[FIG. 3] FIG. 3 is a diagram illustrating the operation performed by a ranging system for comparison.
[FIG. 4] FIG. 4 is a diagram illustrating an example of the operation of a ranging system according to a modified example of the embodiment.
[FIG. 5] FIG. 5 is a diagram illustrating the operation of a ranging system for comparison.

### Description of Embodiments

Hereinafter, an embodiment in which a ranging method and a ranging system according to the present disclosure are applied will be described.

### <Embodiment>

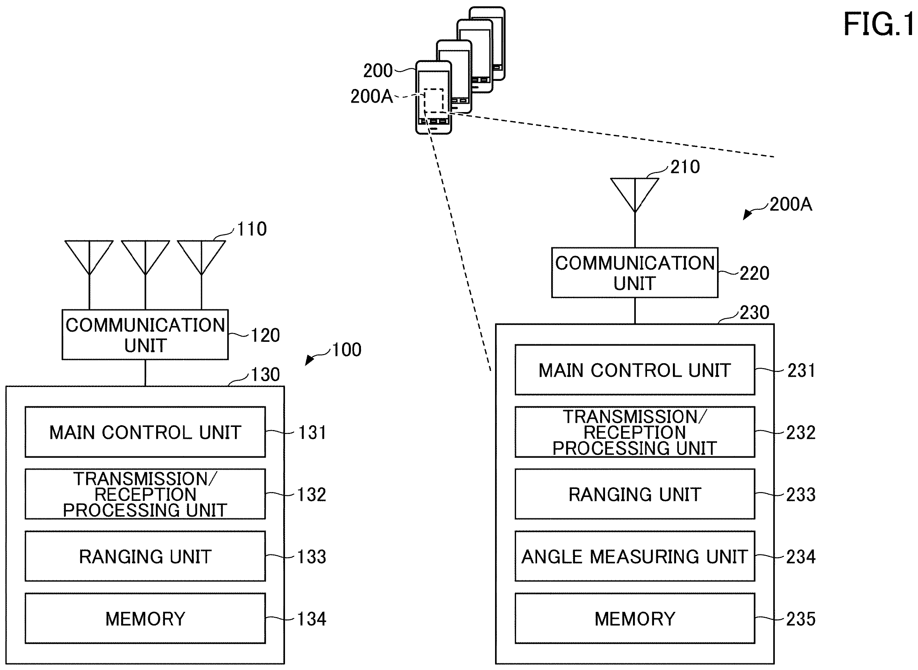

FIG. 1 is a diagram illustrating an example of the configuration of the ranging system 300 according to the embodiment. A ranging system 300 includes a ranging apparatus 100 and a plurality of smartphones 200.

Each smartphone 200 includes a ranging apparatus 200A. The ranging apparatus 100 performs a ranging process for measuring the distance between the ranging apparatus 100 and the smartphone 200 in cooperation with the ranging apparatus 200A of the smartphone 200.

The ranging apparatus 100 is an example of a first communication station, and a plurality of ranging apparatuses 200A included in the plurality of smartphones 200 are examples of a plurality of second communication stations. Here, as an example, a configuration in which the ranging apparatus 100 is a fixed station that does not move and the ranging apparatus 200A included in each smartphone 200 is a mobile station that can be moved will be described. The fixed station is provided, for example, in a parked vehicle or a building.

### <Configuration of the ranging apparatus 100>

The ranging apparatus 100 includes three antennas 110, a communication unit 120, and an MCU (Micro Controller Unit) 130. The antenna 110 is connected to the communication unit 120 and receives signals transmitted from the smartphone 200. FIG. 1 illustrates a configuration in which the ranging apparatus 100 includes three antennas 110, but the ranging apparatus 100 may include four or more antennas 110. Two of the three antennas 110 are arranged on the first axis of two axes orthogonal to each other, two are arranged on the second axis of two axes orthogonal to each other, and one of the antennas is positioned so that the antenna lies on both the first and the second axes.

The communication unit 120 includes an AFE (Analog Front End), an AD (Analog to Digital) converter, etc., and performs signal processing such as AD conversion on signals received from the smartphone 200 by the antenna 110 and outputs the signals to the MCU 130.

The MCU 130 includes a main control unit 131, a transmission/reception processing unit 132, a ranging unit 133, and a memory 134. As an example, the MCU 130 is implemented by a microcomputer including a CPU (Central Processing Unit), a RAM (Random Access Memory), a ROM (Read Only Memory), and an internal bus. The main control unit 131, the transmission/reception processing unit 132, and the ranging unit 133 represent functions of programs executed by the MCU 130 as functional blocks. The memory 134 functionally represents the memory of the MCU 130.

The main control unit 131 is a processing unit that controls the entire MCU 130 and performs processing other than the processing performed by the transmission/reception processing unit 132 and the ranging unit 133. The main control unit 131 performs processing to transmit, to the ranging apparatus 200A, data representing the phase difference when the signal transmitted from the ranging apparatus 200A is received by the three antennas 110, processing to transmit, to the ranging apparatus 200A, data representing the phase measured by the ranging unit 133, processing to transmit, to the ranging apparatus 200A, a request signal described later, and processing to store, in the memory 134, the ranging data received from the ranging apparatus 200A. The ranging data represents the distance measured by the ranging unit 233 of the ranging apparatus 200A.

The transmission/reception processing unit 132 transmits and receives signals to and from the ranging apparatus 200A of the smartphone 200 in order to obtain data such as phase and frequency components necessary for the ranging unit 133 to perform ranging.

The ranging unit 133 performs ranging in a ToA (Time of Arrival) format using one of the three antennas 110. The ranging unit 133 measures the phase of the signal received from the ranging apparatus 200A of the smartphone 200. The main control unit 131 transmits the data representing the measured phase to the ranging apparatus 200A of the smartphone 200 via the transmission/reception processing unit 132.

The memory 134 stores programs, data, and the like necessary for the main control unit 131 and the transmission/reception processing unit 132 to execute processing for transmitting and receiving signals. The memory 134 stores programs, data, and the like necessary for the ranging unit 133 to execute processing for ranging, and stores data representing the phase measured by the ranging unit 133. The memory 134 also stores ranging data received from the ranging apparatus 200A.

### <Configuration of the ranging apparatus 200A>

The ranging apparatus 200A includes an antenna 210, a communication unit 220, and an MCU 230. Each antenna 210 is connected to the communication unit 220 and receives a signal transmitted from the smartphone 200.

As an example, the ranging apparatus 200A has the same configuration as the ranging apparatus 100, but differs from the ranging apparatus 100 in that the ranging apparatus 200A calculates the distance. The antenna 210, the communication unit 220, and the MCU 230 are the same as the antenna 110, the communication unit 120, and the MCU 130 of the ranging apparatus 100, respectively.

The MCU 130 has a main control unit 231, a transmission/reception processing unit 232, a ranging unit 233, an angle measuring unit 234, and a memory 235. The main control unit 231, the transmission/reception processing unit 232, the ranging unit 233, and the memory 235 are similar to the main control unit 131, the transmission/reception processing unit 132, the ranging unit 133, and the memory 134 of the MCU 130 of the ranging apparatus 100. However, the ranging unit 233 is different from the ranging unit 133 in that the ranging unit 233 calculates a distance, and the MCU 230 is different from the MCU 130 in that an angle measuring unit 234 is included therein.

The main control unit 231, the transmission/reception processing unit 232, the ranging unit 233, and the angle measuring unit 234 represent functions of programs executed by the MCU 230 as functional blocks. The memory 235 functionally represents the memory of the MCU 230.

The main control unit 231 is a processing unit that controls the entire MCU 230 and performs processes other than those executed by the transmission/reception processing unit 232, the ranging unit 233, and the angle measuring unit 234. When the main control unit 231 receives the request signal described later from the ranging apparatus 100, the main control unit 231 transmits the ranging data to the ranging apparatus 100.

The transmission/reception processing unit 232 transmits and receives signals to and from the ranging apparatus 100 in order to acquire data such as phase, frequency components, and phase difference data necessary for the ranging unit 233 and the angle measuring unit 234 to perform ranging and angle measurement.

The ranging unit 233 performs ranging processing in cooperation with the ranging unit 133, transmits signals of multiple frequencies from the antenna 210 to the ranging apparatus 100, and receives signals of multiple frequencies from the ranging apparatus 100. The ranging unit 233 acquires, from the ranging apparatus 100, data representing the phase of each frequency when the ranging apparatus 100 receives the ranging signal.

The ranging unit 233 obtains the total phase (reciprocating phase) of each frequency between the phase when the antenna 210 receives the signal of each frequency and the phase when the ranging apparatus 100 receives the signal of each frequency, and measures the distance between the ranging apparatus 100 and the smartphone 200 (the ranging apparatus 200A) from the relationship between the plurality of frequencies and the reciprocating phase at each frequency. The ranging unit 233 stores ranging data representing the measured distance in the memory 235.

The angle measuring unit 234 measures the elevation angle and azimuth angle in the polar coordinate system of the position of the ranging apparatus 100 with respect to the ranging apparatus 200A in AoA (Angle of Arrival) format based on the phase difference data transmitted from the ranging apparatus 100. The phase difference data transmitted from the ranging apparatus 100 is data representing the phase difference when the signal transmitted by the ranging apparatus 200A is received by the three antennas 110 of the ranging apparatus 100. The phase difference data transmitted from the ranging apparatus 100 is transmitted from one of the three antennas 110 of the ranging apparatus 100, and the ranging apparatus 200A receives the data by the antenna 210. The angle measuring unit 234 stores the angle data representing the measured elevation angle and azimuth angle in the memory 235.

The memory 235 stores programs, data, and the like necessary for the main control unit 231 and the transmission/reception processing unit 232 to execute the processing for transmitting and receiving signals. The memory 235 stores programs, data, and the like necessary for the ranging unit 233 and the angle measuring unit 234 to execute the processing for ranging and angle measuring, and also stores ranging data and angle measuring data.

### <Operation of the ranging system 300>

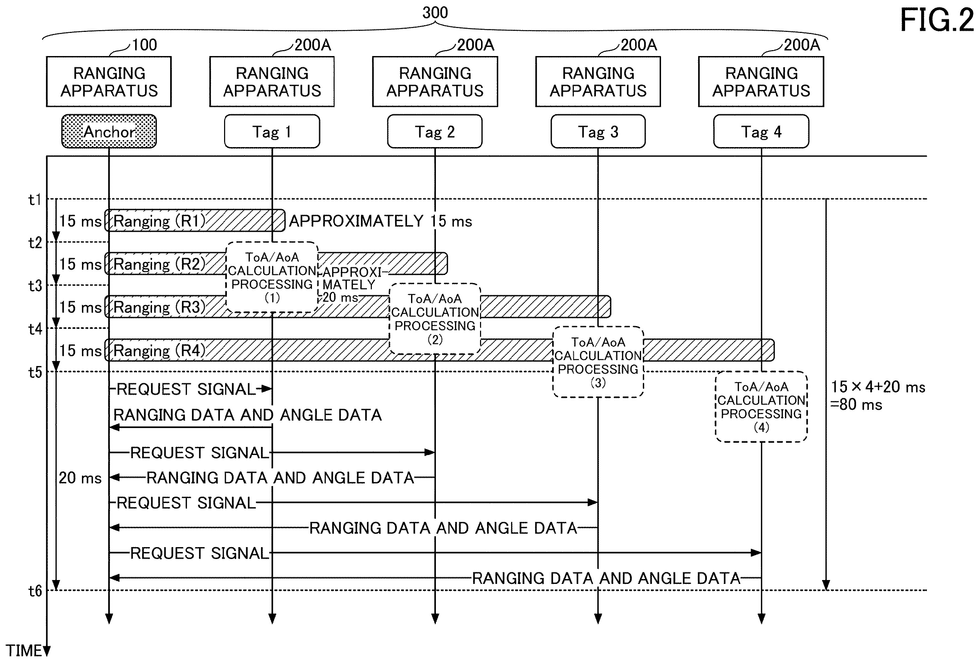

FIG. 2 illustrates an example of the operation of the ranging system 300. FIG. 2 illustrates the operation of the ranging apparatus 100 (anchor) and the four ranging apparatuses 200A (tag 1 to tag 4) in chronological order. In FIG. 2, the vertical axis is the time axis, and the passage of time is indicated from top to bottom.

An anchor (the ranging apparatus 100) performs ranging (R1) with tag 1 (the ranging apparatus 200A) at time t1. Ranging (R1) includes ranging for distance measuring and ranging for angle measuring. As an example, the time required for ranging is 15 ms. Ranging (R2) through ranging (R4) similarly includes ranging for distance measuring and ranging for angle measuring.

Ranging for distance measuring is a process performed for ranging signals of multiple frequencies, the process including transmitting a ranging signal from the ranging apparatus 200A to the ranging apparatus 100, transmitting a ranging signal of the same frequency from the ranging apparatus 100 to the ranging apparatus 200A, and further transmitting, to the ranging apparatus 200A, data representing the phase when the ranging apparatus 100 receives the ranging signal from the ranging apparatus 200A.

In the ranging for angle measuring, an angle measuring signal is transmitted from the antenna 210 to the ranging apparatus 100, and the ranging apparatus 100 receives the signal by the three antennas 110, and the ranging apparatus 100 transmits data representing the phase difference when the signal is received by the three antennas 110, from one of the three antennas 110 to the ranging apparatus 200A. The data representing the phase difference includes the phase difference when the signal is received by the two antennas 110 arranged on the first axis and the phase difference when the signal is received by the two antennas 110 arranged on the second axis. The ranging apparatus 200A then receives the data representing the phase difference from the ranging apparatus 100. The ranging for angle measuring is a process from the transmission of the angle measuring signal from the antenna 210 to the ranging apparatus 100 to the reception of the data representing the phase difference by the ranging apparatus 200A.

When the ranging (R1) with tag 1 (the ranging apparatus 200A) is completed, the anchor (ranging apparatus 100) performs a ranging (R2) with tag 2 (the ranging apparatus 200A) at time t2. Similarly, when the ranging (R2) with tag 2 is completed, the anchor (ranging apparatus 100) performs a ranging (R3) with tag 3 (the ranging apparatus 200A) at time t3. Furthermore, when the ranging (R3) with tag 3 is completed, the anchor (ranging apparatus 100) performs a ranging (R4) with tag 4 (the ranging apparatus 200A) at time t4. The ranging (R4) with tag 4 is completed before time t5.

In this manner, the ranging apparatus 100 performs a transmission process for bidirectionally transmitting and receiving ranging signals of a plurality of frequencies to and from each of the plurality of ranging apparatuses 200A in turn. The transmission process is a transmission/reception process in which the ranging apparatus 100 sends and receives ranging signals of a plurality of frequencies bidirectionally in turn to and from each of the plurality of ranging apparatuses 200A. The transmission process is ranging (R1) to (R4) performed by the ranging apparatus 100 with the plurality of ranging apparatuses 200A (tag 1 to tag 4). The ranging apparatus 100 performs ranging (R1) to (R4) with each of the plurality of ranging apparatuses 200A in turn in a time division manner. To perform ranging (R1) to (R4) in a time division manner means that the ranging (R1) to (R4) between the ranging apparatus 100 and each of the ranging apparatuses 200A do not overlap.

Each of the ranging apparatuses 200A performs ToA and AoA calculation processing when the ranging is completed. Tag 1 performs ToA and AoA calculation processing (1) between time t2 and t4, and tag 2 performs ToA and AoA calculation processing (2) between time t3 and t5. Tag 3 performs ToA and AoA calculation processing (3) from time t4 to a little after time t5, and tag 4 performs ToA and AoA calculation processing (4) from time t5 to a little before time t6. In FIG. 2, the time during which tag 1 to tag 4 perform ToA and AoA calculation processing is referred to as a calculation processing time.

When ranging with tag 1 to tag 4 is completed, the anchor (the ranging apparatus 100) transmits a request signal to the tag 1, and the tag 1 transmits the ranging data and angle data to the ranging apparatus 100 at a time point after time t5. When the anchor (the ranging apparatus 100) receives the ranging data and angle data from the tag 1, it transmits a request signal to the tag 2, and the tag 2 transmits the ranging data and angle data to the ranging apparatus 100. When the anchor (the ranging apparatus 100) receives the ranging data and angle data from the tag 2, it transmits a request signal to the tag 3, and the tag 3 transmits the ranging data and angle data to the ranging apparatus 100. When the anchor (the ranging apparatus 100) receives the ranging data and angle data from the tag 3, it transmits a request signal to the tag 4, and the tag 4 transmits the ranging data and angle data to the ranging apparatus 100.

Thus, the ranging apparatus 100 transmits a request signal to each of the plurality of ranging apparatuses 200A in turn, and the plurality of ranging apparatuses 200A transmits the ranging data and angle data to the ranging apparatus 100 according to the order in which the request signals are transmitted.

That is, the ranging apparatus 100 transmits a request signal to any one ranging apparatus 200A among the plurality of ranging apparatuses 200A, receives the ranging data and angle data from the one ranging apparatus 200A, and then transmits a request signal to any other one ranging apparatus 200A among the plurality of ranging apparatuses 200A, and receives the ranging data and angle data from the other one ranging apparatus 200A.

That is, the ranging apparatus 100 transmits a request signal to each of the plurality of ranging apparatuses 200A in a time division manner according to the order in which the transmission processing is performed, and receives the ranging data and angle data, after the transmission processing for transmitting and receiving signals of the plurality of frequencies bidirectionally to and from each of the plurality of ranging apparatuses 200A in turn.

Also, the ranging apparatus 100 transmits the request signal after the calculation processing time for each of tag 1 to tag 4 has elapsed. Therefore, the ranging apparatus 100 transmits the request signal for each of tag 1 to tag 4 after the calculation processing time required for each of tag 1 to tag 4 to calculate the distance has elapsed.

The ranging apparatus 100 completes the reception of the ranging data and angle data from tag 1 to tag 4 by time t6. The required time from the time when the ranging apparatus 100 transmits the request signal to tag 1 to tag 4 to the time when the ranging data and angle data are received from tag 1 to tag 4, is 20 ms, as an example.

That is, the required time from the time when the ranging apparatus 100 starts ranging with tag 1 (the ranging apparatus 200A) at time t1 to the time when the ranging data and angle data are received from tag 4 at time t6, is 80 ms. This required time is equivalent to the overall processing time.

### <Operation of a ranging system 30 for comparison>

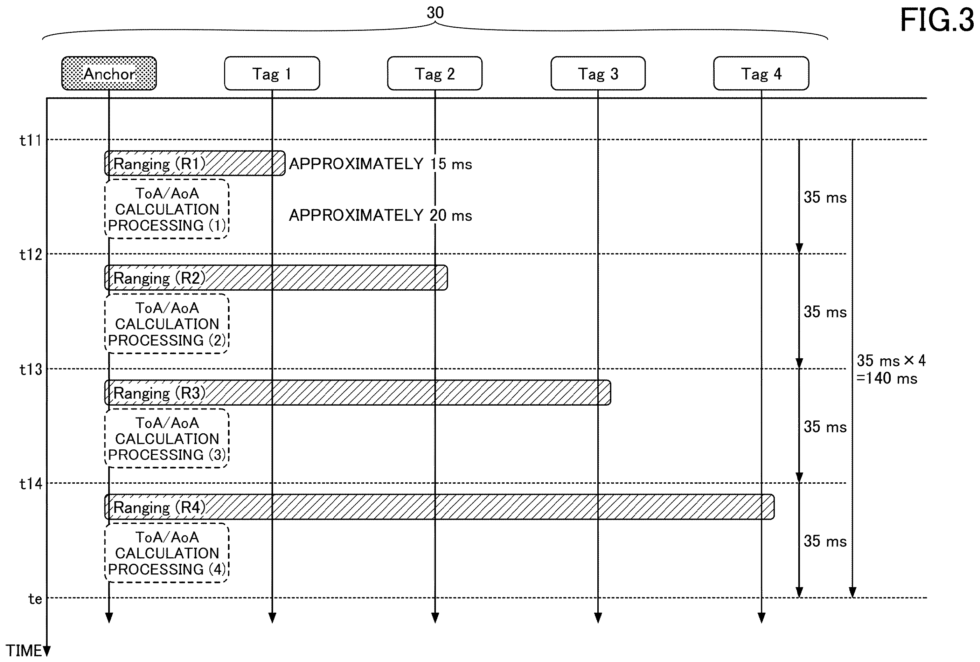

Here, the operation of the ranging system 30 for comparison will be described with reference to FIG. 3. FIG. 3 is a diagram illustrating the operation performed by the ranging system 30 for comparison. In the ranging system 30 for comparison, the anchor performs the calculation processing of ranging and angle measurement by using ToA and AoA. The ranging system 30 for comparison and the operation of the ranging system 30 for comparison illustrated in FIG. 3 are not conventional techniques.

After ranging each tag 1 to tag 4, the anchor performs the calculation processing of ranging and angle measurement by using ToA and AoA. After the calculation processing of ranging and angle measurement by using ToA and AoA is completed, the anchor performs ranging with the next tag .

Specifically, as illustrated in FIG. 3, at time t11, the anchor starts ranging (R1) with tag 1, and when the ranging (R1) with tag 1 is completed, it performs the calculation processing (1) of ranging and angle measurement by using ToA and AoA using the phase data acquired in the ranging (R1) with tag 1 to obtain ranging data and angle measurement data. As an example, the total time required for the ranging (R1) and the calculation processing (1) for ranging and

### angle measurement by ToA and AoA is 35 ms.

The anchor starts the ranging (R2) with tag 2 at time t12, and when the ranging (R2) with tag 2 is completed, the phase data acquired in the ranging (R2) with tag 2 is used to perform the calculation processing (2) for ranging and angle measurement by ToA and AoA.

The anchor starts the ranging (R3) with tag 3 at time t13, and when the ranging (R3) with tag 3 is completed, the phase data acquired in the ranging (R3) with tag 3 is used to perform the calculation processing (3) for ranging and angle measurement by ToA and AoA.

The anchor starts the ranging (R4) with tag 4 at time t14, and when the ranging (R4) with tag 4 is completed, the phase data acquired in the ranging (R4) with tag 4 is used to perform the calculation processing (4) for ranging and angle measurement by ToA and AoA. All processes are completed at time te.

As described above, when the anchor performs the calculation processing (1) to (4) for ranging and angle measurement by ToA and AoA, and when the ranging (R1) to (R4) and the calculation processing (1) to (4) for ranging and angle measurement by ToA and AoA are performed so as not to overlap in the time axis direction in a time division manner, the time required from the time when the anchor starts the ranging (R1) with the tag 1 at time t11 until all the processes are completed at time te is 140 ms (35 ms×4).

### <Comparison of operations of the ranging system 300 and the ranging system 30 for comparison>

As described above, in the ranging system 300 of the embodiment, the ranging apparatuses 200A (tag 1 to tag 4) of the smartphone 200 perform the calculation processing (1) to (4) for ranging and angle measurement by using ToA and AoA without the ranging apparatus 100 (anchor) performing the calculation processing (1) to (4) for ranging and angle measurement by using ToA and AoA. The ranging apparatus 100 performs the ranging (R1) to (R4) with the tag 1 to tag 4 in turn in a time division manner, and the tag 1 to tag 4 immediately perform the calculation processing (1) to (4) for ranging and angle measurement by using ToA and AoA, respectively, when the ranging (R1) to (R4) are completed. In order to obtain the ranging data and angle measurement data, the ranging apparatus 100 transmits a request signal when the calculation processing (1) to (4) for ranging and angle measurement by using ToA and AoA of the tag 1 to tag 4 are completed, and receives the ranging data and angle measurement data from the tag 1 to tag 4.

By performing such processing, the ranging system 300 of the embodiment reduces the required time to 80 ms compared to the required time (140 ms) of the ranging system 30 for comparison. This means that the required time is reduced by greater than or equal to 40%.

Although the configuration in which the ranging apparatuses 200A (tag 1 to tag 4) perform the calculating processing for ranging and angle measurement by using ToA and AoA has been described above, the ranging apparatuses 200A (tag 1 to tag 4) may perform the calculating processing for ranging by using ToA and not perform calculating processing for angle measurement by using AoA.

In order to measure the distance by ToA, in ranging for distance measuring, the ranging apparatus 100 and each of the ranging apparatuses 200A (tag 1 to tag 4) bidirectionally transmit and receive the ranging signals of a plurality of frequencies, and the ranging apparatus 100 transmits data representing the phase when the ranging signal is received to the ranging apparatus 200A, which is time-consuming. On the other hand, in the case of angle measuring by AoA, the angle measuring signal of a single frequency is received once by the three antennas 110 in ranging for angle measuring, the ranging apparatus 100 transmits the data representing the phase difference to the ranging apparatus 200A, and the ranging apparatus 200A performs the calculation processing for angle measuring, so that the required time is significantly shorter than that of the ranging by ToA. Therefore, in the operation illustrated in FIGS. 2 and 3, even if only the distance measuring is performed and the angle measuring is not performed, the processing time shortening effect of the ranging system 300 of the embodiment with respect to the ranging system 30 for comparison is the same.

### <Effect>

As described above, the ranging method according to the embodiment is a ranging method in the ranging system 300 including the ranging apparatus 100 (an example of a first communication station) and a plurality of the ranging apparatuses 200A (an example of a second communication station) which measure a distance to the first communication station by bidirectionally transmitting and receiving a ranging signal of a plurality of frequencies to and from the first communication station, wherein the plurality of second communication stations, upon receiving a request signal from the first communication station, transmit ranging data representing the measured distance to the first communication station. In this way, the ranging apparatus 200A (an example of the second communication station) performs the calculation processing of ranging measurement and angle measurement, thereby shortening the overall required time.

Therefore, it is possible to provide a ranging method capable of shortening the processing time required for ranging when ranging is performed with a plurality of communication stations (second communication stations).

Further, the ranging apparatus 100 (an example of a first communication station) performs transmission/reception processing to transmit and receive ranging signals of multiple frequencies bidirectionally to and from each of the plurality of ranging apparatuses 200A (an example of a second communication station) in turn, and each of the plurality of second communication stations measures the distance to the first communication station based on the phase of the ranging signals of multiple frequencies in the transmission/reception processing with the first communication station. Therefore, after performing transmission/reception processing with each of the plurality of ranging apparatuses 200A (an example of a second communication station) in turn, the distance can be measured based on the phase of the ranging signals reciprocated between the ranging apparatus 100 (an example of a first communication station) and each of the plurality of ranging apparatuses 200A (an example of a second communication station).

Further, the ranging apparatus 100 (an example of a first communication station) transmits request signals to each of the plurality of ranging apparatuses 200A (an example of a second communication station) in turn, and the plurality of second communication stations transmit the ranging data to the first communication station according to the order in which the request signals are transmitted. Therefore, the ranging apparatus 100 (an example of a first communication station) can acquire ranging data from the plurality of ranging apparatuses 200A (an example of a second communication station) in turn.

Further, the ranging apparatus 100 (an example of a first communication station) transmits a request signal to any one of the plurality of second communication stations and receives the ranging data from the second communication station, and then transmits a request signal to any other one of the plurality of second communication stations and receives the ranging data from the other one of the second communication stations. Therefore, the transmission of the request signal to each of the second communication stations and the reception of the ranging data are performed in a time division manner, and the ranging apparatus 100 (an example of a first communication station) can efficiently acquire ranging data.

Further, the ranging apparatus 100 (an example of a first communication station) performs transmission/reception processing to transmit and receive ranging signals of a plurality of frequencies in a bidirectional manner to and from each of the plurality of second communication stations in turn, and then transmits a request signal to each of the plurality of second communication stations and receives the ranging data in a time division manner according to the order in which the transmission/reception processing was performed. Therefore, the request signal can be transmitted and the ranging data can be received after the transmission/reception processing with each of the second communication stations is completed, and the processing time can be reduced by effectively using the communication time. Further, because the distance calculation takes time, the processing time can be reduced in consideration of the time required for the calculation and the order, by transmitting a request signal to each of the plurality of second communication stations and receiving the ranging data in a time division manner according to the order in which the transmission/reception processing was performed.

Further, the ranging apparatus 100 (an example of a first communication station) transmits a request signal to each of the plurality of ranging apparatuses 200A after the calculation processing time required for calculating the distance by each of the plurality of ranging apparatuses 200A has elapsed. Therefore, the request signal can be transmitted to each of the plurality of second communication stations according to the order in which the transmission/reception processing was performed, at the timing in which the distance calculation of the distance is completed at each of the plurality of second communication stations, and the processing time can be reduced by effectively using the time without the occurrence of a waiting time for the calculation to be completed.

Further, the ranging system 300 includes a ranging apparatus 100 (an example of a first communication station) and a plurality of second communication stations which measure the distance to the first communication station by bidirectionally transmitting and receiving ranging signals of a plurality of frequencies to and from the first communication station, and when the request signal is received from the first communication station, the plurality of second communication stations transmit ranging data representing the measured distance to the first communication station. In this way, the ranging apparatus 200A (an example of a second communication station) performs the calculation processing of ranging and angle measurement, so that the overall required time can be reduced.

Therefore, it is possible to provide a ranging system 300 capable of shortening the processing time required for ranging when performing ranging with a plurality of communication stations (second communication stations).

### <Modified example>

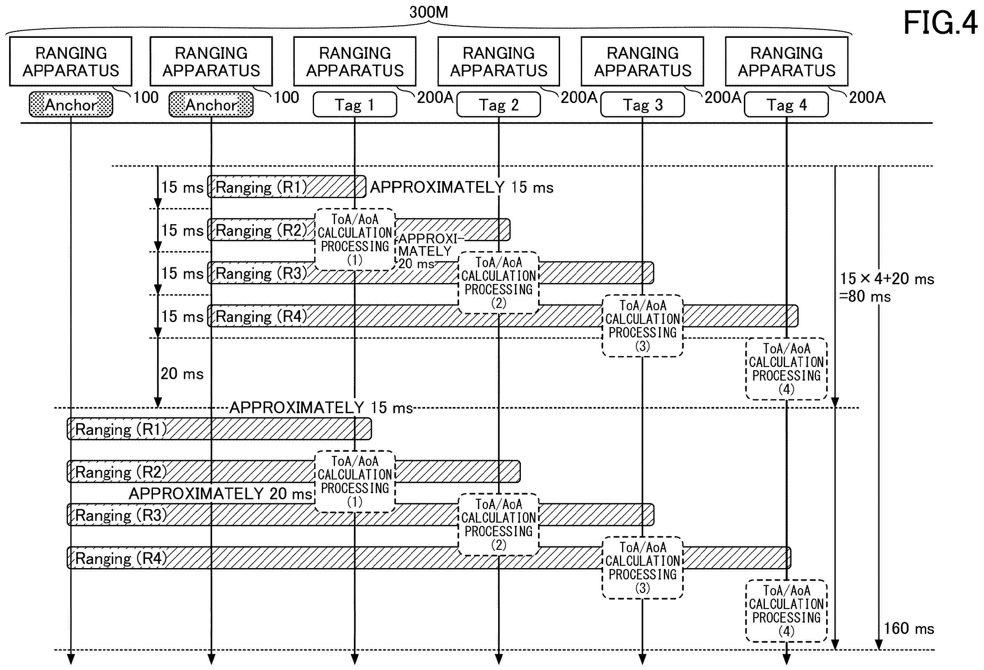

FIG. 4 is a diagram illustrating an example of the operation of a ranging system 300M according to a modified example of the embodiment. The ranging system 300M includes two ranging apparatuses 100 (anchor) and four ranging apparatuses 200A (tag 1 to tag 4), and each of the two ranging apparatuses 100 performs processing for ranging and angle measurement with the four ranging apparatuses 200A (tag 1 to tag 4) in a time division manner. FIG. 4 illustrates the operation of the two ranging apparatuses 100 (anchor) and the four ranging apparatuses 200A (tag 1 to tag 4) in chronological order. In FIG. 4, the vertical axis is the time axis, and the passage of time is indicated from top to bottom.

The operation of the ranging system 300M is an operation in which the operation of the ranging system 300 illustrated in FIG. 2 is doubled in the time axis direction, and the overall processing time is 160 ms. In FIG. 4, the transmission of the request signal and the reception of the ranging data and angle data performed at times t5 to t6 in FIG. 2 are not illustrated, but the same operation is performed.

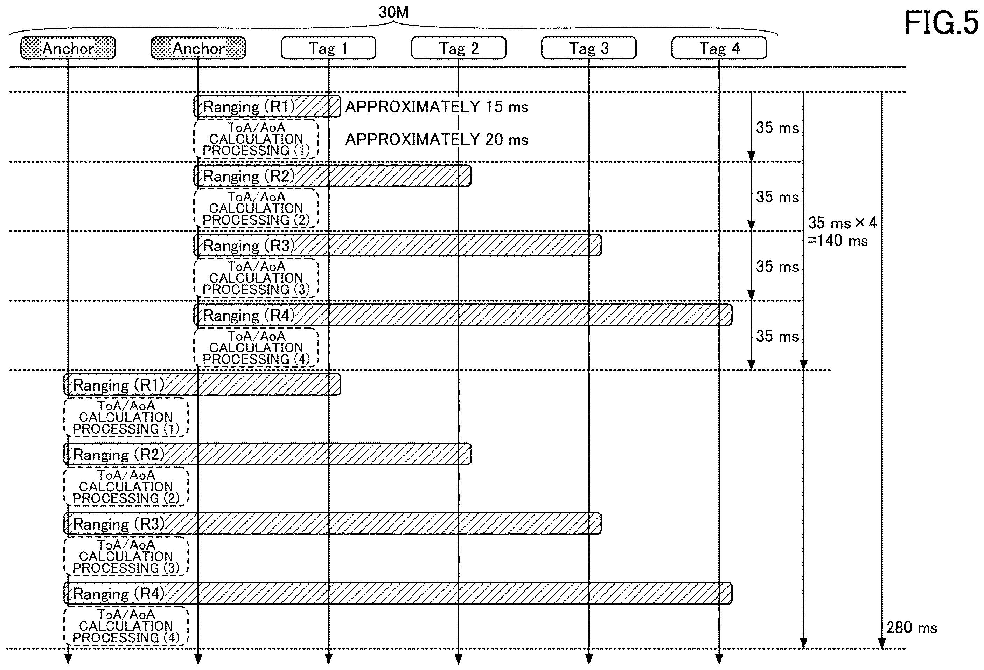

FIG. 5 is a diagram illustrating the operation of the ranging system 30M for comparison. The ranging system 30M for comparison includes two anchors and tag 1 to tag 4, and each of the two anchors performs ranging and angle measurement processing with tag 1 to tag 4 in a time division manner. FIG. 5 illustrates the operation of the two anchors and tag 1 to tag 4 in chronological order. In FIG. 5, the vertical axis is the time axis, and the passage of time is indicated from top to bottom.

The operation of the ranging system 30M for comparison is an operation in which the operation of the ranging system 30 for comparison illustrated in FIG. 3 is doubled in the time axis direction, and the overall processing time is 280 ms.

Thus, even when the number of anchors is increased to two, the ranging system 300M of the modified example of the embodiment can reduce the required time by greater than or equal to 40%, from 280 ms to 160 ms, compared with the ranging system 30M for comparison.

Although the ranging method and the ranging system of the exemplary embodiment of the present disclosure have been described above, the present disclosure is not limited to the specifically disclosed embodiments and can be modified and changed in various ways without departing from the scope of the claims.

The present international application claims priority under Japanese patent application 2022-169070 filed on October 21, 2022, the entire contents of which are incorporated by reference herein.

### Reference Signs List

100 ranging apparatus (anchor, an example of a first communications station)
110 antenna
120 communication unit
131 main control unit
132 transmission/reception processing unit
133 ranging unit
134 memory
200 smartphone
200A ranging apparatus (tag 1 to tag 4, example of second communication station)
210 antenna
220 communication unit
231 main control unit
232 transmission/reception processing unit
233 ranging unit
234 angle measuring unit
235 memory
300, 300M ranging system

## Claims

1. A ranging method performed in a ranging system, the ranging system comprising:
a first communication station; and
a plurality of second communication stations configured to measure a distance to the first communication station by bidirectionally transmitting and receiving signals of a plurality of frequencies to and from the first communication station, wherein
when the plurality of second communication stations receive a request signal from the first communication station, the plurality of second communication stations transmit ranging data representing the measured distance to the first communication station.

2. The ranging method according to claim 1, wherein
the first communication station performs transmission/reception processing for bidirectionally transmitting and receiving the signals of the plurality of frequencies to and from each of the plurality of second communication stations in turn, and
each of the plurality of second communication stations measures the distance to the first communication station based on a phase of the signals of the plurality of frequencies in the transmission/reception processing with the first communication station.

3. The ranging method according to claim 1 or 2, wherein
the first communication station transmits the request signal to each of the plurality of second communication stations in turn, and
the plurality of second communication stations transmit the ranging data to the first communication station according to an order in which the request signals are transmitted.

4. The ranging method according to claim 3, wherein the first communication station transmits the request signal to any one second communication station of the plurality of second communication stations, receives the ranging data from the one second communication station, and then transmits the request signal to any other one second communication station of the plurality of second communication stations, and receives the ranging data from the other one second communication station.

5. The ranging method according to claim 3 or 4, wherein the first communication station performs transmission/reception processing for bidirectionally transmitting and receiving the signals of the plurality of frequencies to and from each of the plurality of second communication stations in turn, and then transmits the request signal to each of the plurality of second communication stations in a time division manner according to an order in which the transmission/reception processing is performed, and receives the ranging data.

6. The ranging method according to claim 5, wherein the first communication station transmits the request signal to each of the plurality of second communication stations, after a calculation processing time required to calculate the distance by each of the plurality of second communication stations has elapsed.

7. A ranging system comprising:
a first communication station; and
a plurality of second communication stations configured to measure a distance to the first communication station by bidirectionally transmitting and receiving signals of a plurality of frequencies to and from the first communication station, wherein
when the plurality of second communication stations receive a request signal from the first communication station, the plurality of second communication stations transmit ranging data representing the measured distance to the first communication station.
